(19)

Europäisches
Patentamt
European
Patent Office
Office européen
des brevets

(11) **EP 1 883 279 A1**

(12) **EUROPEAN PATENT APPLICATION**
published in accordance with Art. 153(4) EPC

(43) Date of publication:
**30.01.2008 Bulletin 2008/05**

(51) Int Cl.:
*H05B 41/288* (2006.01)  *H05B 41/24* (2006.01)
*H01J 61/86* (2006.01)  *H01J 61/12* (2006.01)
*H01J 61/88* (2006.01)

(21) Application number: **06729791.1**

(22) Date of filing: **23.03.2006**

(86) International application number:
**PCT/JP2006/305843**

(87) International publication number:
**WO 2006/120805 (16.11.2006 Gazette 2006/46)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **12.05.2005 JP 2005139457**

(71) Applicant: **Harison Toshiba Lighting Corp.
Imabari-shi,
Ehime 794-8510 (JP)**

(72) Inventors:
• **TAMAI, Kouichi,
c/o HARISON TOSHIBA LIGHTING Corp.
Imabari-shi,
Ehime 794-8510 (JP)**

• **ISHIGAMI, Toshihiko,
HARISON TOSHIBA LIGHTING Corp
Imabari-shi,
Ehime 794-8510 (JP)**

(74) Representative: **Cheyne, John Robert Alexander M.
HASELTINE LAKE
Redcliff Quay
120 Redcliff Street
Bristol BS1 6HU (GB)**

(54) **METAL HALIDE DISCHARGE LAMP AND METAL HALIDE DISCHARGE LAMP SYSTEM**

(57)    [Problems]

To provide a mercury-free metal halide discharge lamp and a metal halide discharge lamp system for lighting the same of the dc lighting type with reduced inter-electrode color temperature difference.

[Means of solving problems]

A metal halide discharge lamp includes a fire-resistant and light-transmitting hermetic vessel 1, a pair of electrodes 2A, 2B sealed within the hermetic vessel 1, and a discharge medium containing a halide and a rare gas and essentially not containing mercury and sealed within the hermetic vessel 1, wherein a polarity of a lamp current flowing in the hermetic vessel is a single polarity not changing with time and the lamp is lighted so that a discharge arc of the discharge medium is corrected in a direction of a straight line connecting the electrodes using an acoustic resonance phenomenon.

*FIG. 3*

EP 1 883 279 A1

## Description

TECHNICAL FIELD

The present invention relates to a metal halide discharge lamp essentially not having mercury sealed and a metal halide discharge lamp system for lighting the same.

BACKGROUND ART

Recently, a high-intensity discharge lamp (HID lamp) has been widely used in the outdoor lighting field because of its characteristics of high efficiency and long life. Among them, a metal halide lamp has a favorable color rendering properties and is spreading not only in the outdoor lighting field but also in the indoor lighting field, utilizing its characteristics, and it also draws attention as light sources for video equipment and for head lamp of a vehicle. The conventional metal halide lamp used in general has mercury vapor sealed along with a rare gas as a buffer (hereinafter referred to as "lamp with mercury" for convenience).

Since the lamp with mercury has a large environmental load, a metal halide lamp without using mercury has been awaited.

In response to this request, a metal halide lamp having no mercury sealed was invented by the present inventors (See Patent Document 1) and development for putting it into practice has been actively promoted since then. Such a lamp for an automobile head lamp has been in practical use since July 2004. The metal halide lamp having no mercury sealed (hereinafter referred to as "mercury-free lamp" for convenience) is preferable since no mercury is used therein and has several advantages such as favorable rising property in spectroscopic characteristics at start, suitability for dimming, and little variation in lamp characteristics. The metal halide lamp of this configuration is expected to further spread. In Patent Document 1, dc lighting of the mercury-free lamp is enabled in addition to ac lighting, by which color separation becomes practically negligible as the result of no mercury sealed, and reduction in size, weight, and costs of an operating circuit is achieved.

The lighting method of a mercury-free lamp now in practical use is ac lighting similarly to a lamp with mercury. However, when a metal halide discharge lamp used for an automobile head lamp is to be lighted by ac, it is necessary to use a dc - ac conversion circuit in an operating circuit since its power source is dc. Currently, a full-bridge inverter is used as the dc - ac conversion circuit. Since this inverter supplies power to be inputted to a lamp, it requires a relatively large power semiconductor switching device. Therefore, dc lighting is more preferable as described in Patent Document 3 for the operating circuit from the viewpoint of economy.

Also, the dc lighting of a mercury-free lamp has the following advantages:

1. There is no fade away or flickering of brightness of a discharge arc.

In the case of ac lighting, when a lamp electric current crosses the zero point, since the mercury-free lamp does not have an absorbing effect of free iodine caused by mercury (generation of mercury iodine), rapid increase of a lamp voltage can easily cause flickering in brightness. Also, the discharge arc can easily fade away at this time. On the contrary, these problems are improved by dc lighting. For the similar reason, the dc lighting is resistant against vibration. That is, in the case of ac lighting of a rectangular wave, for example, when a lamp is subjected to a strong vibration, a discharge medium in a liquid state within an hermetic vessel is rapidly evaporated or the like and electric characteristics are rapidly changed, which causes a discharge arc to fade away in the vicinity of zero cross of an electric current.

2. There is little problem of white turbidity or Na missing of a hermetic vessel.

When halides of rare-earth metal, which easily reacts with silica glass, a constituent material of the hermetic vessel, and a metal such as scandium (Sc) and halides of sodium (Na), which can easily pass through silica glass are sealed, the problem of white turbidity or Na missing of the hermetic vessel occurs essentially less in the dc lighting than in the ac lighting. The reason is that in the case of dc lighting, an electric field generated in the hermetic vessel is unidirectional, a metal element is drawn to a cathode and the white turbidity or Na missing occurs on the cathode side, while such phenomena hardly occur on the anode side. Thus, for the entire lamp, the problem of white turbidity or Na missing of the hermetic vessel is reduced.

3. Dimming range can be taken wider.

The reason why the mercury-free lamp is suitable for the above-mentioned dimming is that chromaticity change can be restrained at dimming, but because of polarity conversion in lamp current in the ac lighting, the discharge arc can easily fade out at dimming. On the contrary, since there is no polarity conversion in the dc lighting, the dimming range can be taken wider in addition to restriction on chromaticity change.

Whether the metal halide lamp has mercury or no mercury, when this is lighted by a conventional generally-used metal halide lamp lighting device, a temperature at a center part of the discharge arc can reach approximately 5000K and the temperature drops with a predetermined temperature gradient from the arc center part to 1000K in the vicinity of a tube wall. Therefore, when the metal halide lamp is horizontally lighted, gas heated at the arc center part and having a reduced density is moved upward and the gas with a larger density in the vicinity of the tube wall flows into the arc center, which is called as a convection phenomenon. The discharge arc results to be located close to the above from a virtual straight tube axis connecting a pair of electrodes due to the gas flow by the convection. That is, the discharge arc is curved upward.

Curvature of the discharge arc causes the following problems:

(1) Reduction in light collecting efficiency when combined with a reflecting mirror becomes large.

A distance between a wall surface of the hermetic vessel at an upper part of a discharge space and the discharge arc gets small, a temperature rise of the relevant portion in the hermetic vessel becomes large, and silica glass constituting the hermetic vessel is easily deteriorated. When the silica glass at the relevant portion is deteriorated, a light flux is lowered and the drop of the light collecting efficiency when combined with the reflecting mirror gets large.

(2) Light emitting characteristics are changed.

The silica glass in the hermetic vessel is easily softened, deformation (expansion) occurs due to the softening, internal volume of the discharge space is increased, and the light emitting characteristics are changed.

(3) The light emitting characteristics are lowered.

Temperature drop at a lower part in the discharge space is caused, a coldest temperature determining an operation pressure in the discharge lamp discharge space is lowered, and the light emitting characteristics are lowered.
(4) The shape of the reflecting mirror becomes complicated.

When the metal halide lamp is used in combination with the reflecting mirror, a discharge arc is arranged on an optical axis of the reflecting mirror in general, but since the shape of the discharge arc becomes vertically asymmetric with respect to the optical axis of the reflecting mirror, the sectional shapes of the discharge arc including the optical axis of the reflecting mirror are all different in the entire circumferential direction surrounding the optical axis. Therefore, it is necessary to design the reflecting mirror, considering the different shapes of the discharge arc in the sections in the entire circumferential direction surrounding the optical axis of the reflecting mirror and thus, the design is complicated and as a result, the shape of the reflecting mirror also becomes complicated.

The mercury-free lamp has larger curvature of the discharge arc as compared with the lamp with mercury. That is, the mercury-free lamp has a tendency that the discharge arc is relatively narrowed and thinned. As a result, the curvature caused by gravity induced convection of the discharge arc is larger than the metal halide lamp having mercury sealed (hereinafter referred to as "lamp with mercury" for convenience). Thus, the need of measures against discharge arc curvature is larger than the lamp with mercury.

Various measures have been come up with for correcting the curvature of discharge arc. As an example, a lighting method for correcting the discharge arc into the straight state against the gravity induced convection using an acoustic resonance phenomenon (hereinafter referred to as "straight arc lighting method" for convenience) is known (See Patent Documents 2, 3). When the discharge arc is corrected to the straight state using this strait lighting method, temperature distribution in the hermetic vessel is relatively equalized and local temperature rise in the hermetic vessel (temperature rise at an upper part in the case of horizontal lighting) is reduced so that deterioration and deformation of silica glass can be prevented. Also, by raising a coldest temperature at the lower part in the discharge space, the light emitting efficiency can be improved. Moreover, since the optical axis of the reflecting mirror can be made substantially in the same shape in the entire circumferential direction, a design of one section can be applied to the other sections, by which design of the reflecting mirror is extremely facilitated. As a result, the shape of the reflecting mirror becomes simple.

In the conventional straight arc lighting method, the target lamps are all lamps with mercury.

Patent Document 1: Japanese Patent Laid-Open No. 11-238488
Patent Document 2: Japanese Patent Publication No. 07-009835
Patent Document 3: Patent No. 3189609

DISCLOSURE OF INVENTION

PROBLEM TO BE SOLVED BY THE INVENTION

Then, the inventors has attempted dc lighting by the straight arc lighting method in development to realize straight discharge arc in the mercury-free lamp. As a result, it was found that by setting a frequency of a ripple current superimposed on a basic waveform of a lamp current at a frequency specific to the mercury-free lamp, the discharge arc is made straight and the above problems can be solved. Also, surprisingly, in the case of lighting to make the discharge arc straight (hereinafter referred to as straight arc lighting), even if it is so-called dc lighting, it was found that a color temperature difference between a pair of electrodes (hereinafter referred to as "inter-electrode color temperature difference" for convenience) can be reduced. The present invention was made based on the above discovery.

The present invention has an object to provide a mercury-free metal halide discharge lamp and a metal halide discharge lamp system for lighting the same of the dc lighting type with reduced inter-electrode color temperature difference.

MEANS FOR SOLVING PROBLEM

A metal halide discharge lamp of the present invention comprises:

a fire-resistant light-transmitting hermetic vessel;
a pair of electrodes sealed in the hermetic vessel; and
a discharge medium containing halides and a rare gas and essentially not containing mercury and sealed in the hermetic vessel,
wherein a polarity of a lamp current flowing through the hermetic vessel is in one polarity not changed with time and the lamp is lighted so that a discharge arc of the discharge medium is corrected in a straight direction connecting the electrodes to each other using an acoustic resonance phenomenon.

EFFECT OF THE INVENTION

According to the present invention, a mercury free metal halide discharge lamp with remarkably reduced inter-electrode color temperature difference and a metal halide discharge lamp system for lighting the same can be provided by configuration that dc lighting is carried out for correcting the discharge arc substantially in the straight state against the gravity induced convection using the acoustic resonance phenomenon.

BRIEF DESCRIPTION OF DRAWINGS

Fig. 1 is a front view of an entire lamp illustrating a metal halide lamp for an automobile head lamp as a first mode for putting a metal halide lamp of the present invention into practice.
Fig. 2 is a plan view of the same.
Fig. 3 is an enlarged front view of a light emitting tube of the same.
Figs. 4 are schematic diagrams for explaining a relation between the shape of a discharge arc and a vector of concentration diffusion of the same in comparison with a comparative example of non-straight arc lighting.
Fig. 5 is an enlarged front view of a light emitting tube illustrating a metal halide lamp for a liquid crystal projector as a second mode for putting the metal halide lamp of the present invention into practice.
Fig. 6 is a circuit block diagram illustrating a mode for putting a metal halide discharge lamp system of the present invention into practice.

EXPLANATIONS OF LETTERS OR NUMERALS

1          Hermetic vessel
1a        Surrounding portion
1b        Sealing portion
1d        Sealing tube
1c        Discharge space

| 2A, 2B | Electrode |
| 3A, 3B | External lead-in line |
| 4 | Sealing metal foil |
| B | Base |
| IT | Light emitting tube |
| MHL | Metal halide discharge lamp |
| OT | Outer tube |

BEST MODE(S) FOR CARRYING OUT THE INVENTION

Major allowable modes of each constituent element when putting the present invention into practice will be described below.

The hermetic vessel should be fire-resistant and light-transmitting. Also, the maximum inner diameter of a portion dividing the discharge space can be preferably set within a range of 2.0 to 12.0 mm according to the application of the lamp as appropriate. The above range is mainly employed for a small-sized metal halide discharge lamp. For example, as a lamp for a head lamp, the maximum inner diameter in a range of 2.0 to 4.0 mm is suitable. For projection such as a liquid crystal projector, the maximum inner diameter should be in a range of 5.0 to 1.2 mm. For other general illumination, the maximum inner diameter can be selected as appropriate in a range of 2.0 to 12.0 mm according to its specific application. If the maximum inner diameter of the hermetic vessel is less than 2.0 mm, the inner diameter of the discharge space is too small and the curvature of the discharge arc restricts an inner surface of the hermetic vessel. Thus, there is substantially no necessity for straight arc lighting by superimposing a ripple current any more. With regard to the metal halide discharge lamp with the maximum inner diameter exceeding 12.0 mm, on the contrary, since the curvature of the discharge arc is increased correspondingly with increase of the maximum inner diameter of the hermetic vessel, the discharge arc can hardly be made straight.

The "fire-resistant and light-transmitting" hermetic vessel means that the hermetic vessel may be made from any material as long as it is provided with fire resistance which sufficiently withstands normal operating temperature of the discharge lamp and is capable of leading out light in a desired wavelength region generated by the discharge. Therefore, polycrystal such as silica glass, light-transmitting alumina, YAG or the like or single crystal ceramics can be used. A halogen-resistant or metal-resistant transparent film may be formed on an inner surface of the hermetic vessel or the inner surface of the hermetic vessel may be reformed.

The hermetic vessel is comprised by a surrounding portion and a pair of sealing portions in general. The surrounding portion provides a hollow portion functioning as a discharge space formed in an appropriate shape therein, such as a sphere, oval sphere or substantial column or the like. The discharge space can be made substantially columnar preferably for a metal halide lamp for a head lamp. By this, when the discharge arc is to be curved upward in horizontal lighting, it approaches the inner surface on the upper side of the discharge vessel, by which the temperature rise at the upper part of the discharge vessel is expedited. If the hermetic vessel is made of silica glass, the thickness of the surrounding portion can be made relatively large. That is, the thickness substantially at the center part of the distance between said pair of electrodes can be made larger than the thickness on the both sides. By this, since heat conductivity of the discharge vessel is improved and the temperature rise of the discharge medium adhering to the inner surface on the lower part and the side part of the discharge space of the discharge vessel is expedited, rising of the light flux is accelerated. If the hermetic vessel is made of light-transmitting ceramics, the surrounding portion is preferably formed with substantially uniform thickness.

The pair of sealing portions seal the surrounding portion, support shaft portions of the electrodes, constitute means that contributes to leading-in of electric current from an operating circuit to the electrodes in an hermetic manner, and also extend integrally from both ends of the surrounding portion. In order to seal the electrodes and to lead in the electric current from the operating circuit to the electrodes in an hermetic manner, preferably if the material of the hermetic vessel is silica glass, a sealing metal foil is embedded in an hermetic manner as appropriate hermetic sealing and leading-in means inside the sealing portions. If the hermetic vessel is made of light-transmitting ceramics, such configuration can be employed that the sealing portions are formed as small-diameter cylinder portions, as employed in general, and electrode shafts are inserted so that a slight clearance called as a capillary is formed inside the small-diameter cylinder portions, a gap between lead-in conductors inserted through the ends of the small-diameter cylinder portions and the small-diameter cylinder portions is sealed and the distal ends of the lead-in conductors and the base ends of the electrode shafts are bonded to each other.

The sealing metal foil is the means embedded inside the sealing portions and functioning as a current conducting conductor in cooperation with the sealing portions so that the sealing portions maintain the inside of the surrounding portion in the hermetic vessel in an hermetic manner, and if the hermetic vessel is made of silica glass, molybdenum (Mo) is optimal as a material. Since molybdenum is oxidized approximately at 350°C, it is embedded so that the temperature of the end of the outer side falls below this. A method for embedding the sealing metal foil in the sealing portion is not particularly limited, but a reduced pressure sealing method, pinch seal method or combination of them can be selected and employed as appropriate. In the case of a metal halide lamp used for a small-sized automobile head lamp, which is provided with an hermetic vessel having the maximum inner diameter of 2.0 to 4.0 mm and in which 6 atmospheres or more of a rare gas such as xenon (Xe) is sealed at a room temperature, the latter is more preferable. To one end on the side of the surrounding portion of the sealing metal foil, the base end of the electrode, which will be described later, is connected, while to the other end, the distal end of an external lead-in wire is connected. The base end side of the external lead-in wire is exposed to the outside from the end face of the sealing portion.

The pair of electrodes are sealed inside the hermetic vessel while they are separated and opposed. The distance between said pair of electrodes is preferably 6 mm or less when the maximum inner diameter of the hermetic vessel is in a range of 2.0 to 12.0 mm and in the case of a small-sized metal halide discharge lamp used for projection used as a head lamp of a moving body such as a liquid crystal projector or an automobile or for general illumination, for example. In the case of the liquid crystal projector, the distance is preferably 3 mm or less, for example 1 mm, and it may be 0.5 mm if desired. The distance of 4.2 mm as a center value is standardized for a head lamp. The electrode is provided with a shaft portion whose diameter is preferably formed in the identical straight rod state along the longitudinal direction. The diameter of the shaft portion is preferably 0.25 mm or more, and more preferably 0.45 mm or less. The shaft portion is formed so that it reaches the distal end without having the diameter increased from the shaft portion and the distal end forms a flat end face or the distal end to be a starting point of an arc forms a curved surface or a truncated cone. Alternatively, a portion with a diameter larger than the shaft portion can be formed at the distal end of the shaft portion.

Also, the metal halide lamp of the present invention is in a mode of being lighted in a single polarity in which the polarity of an electric current flowing through the hermetic vessel is not changed with time, that is, dc lighting. Therefore, one of the pair of electrodes functions as an anode and the other as a cathode. The electrode functioning as the anode has a steeper temperature rise and a larger heat radiation area than the cathode and thus, with a thicker electrode main part at the distal end can be used.

Moreover, the pair of electrodes can be formed using a fire-resistant and conductive metal such as genuine tungsten (W), doped tungsten containing a doping agent, thoriated tungsten containing thorium oxide, rhenium (Re) or tungsten - rhenium (W-Re) alloy. In the case for dc lighting, at least the electrode main portion of the electrode functioning as the cathode preferably uses an electrode material whose electron emissive property is made favorable by adding an electron emissive substance such as thoriated tungsten. Then, total flux can be increased as will be described later.

The discharge medium is sealed inside the hermetic vessel and acts as a medium to generate discharge in a vapor or gas state and contains at least a halide of a light emitting metal and a rare gas. However, mercury (Hg) is not sealed essentially. Also, when a halide of a metal mainly contributing to light emission of a visible region as a metal halide discharge lamp is a first halide, the halides may contain a second halide that is smaller in a light emission volume in the visible region than the first halogen and mainly contributes to formation of a lamp voltage in addition. It is only necessary for the light emission volume in the visible region by the metal of the second halide to be small when seen as the entire visible region and irradiation energy may be larger than light emission by the metal of the first halide in a narrow specific wavelength region, for example. The first and the second halides will be described below in more detail.

The first halide is made of a metal halide that emits light mainly as a metal halide discharge lamp. A metal for this purpose may be selected from a known group of various metals generating irradiation of a desired wavelength region according to the application of the metal halide lamp as appropriate and one or more of them can be used.

As a metal halide discharge lamp for an automobile head lamp, for example, a halide of sodium (Na) and scandium (Sc) are preferable as a major component of the first halide because white light conforming to the standard can be emitted efficiently. Also, for the purpose of adjustment of chromaticity of light emission, halides of rare-earth metal such as dysprosium (Dy), neodymium (Nd), holmium (Ho) and thulium (Tm) and halides of one or more types of metal consisting of a group of thallium (Tl) and indium (In) can be used as an auxiliary component.

For a metal halide discharge lamp for projection such as a liquid crystal projector, at least one type selected from halides of rare-earth metal such as dysprosium (Dy), neodymium (Nd), holmium (Ho) and thulium (Tm) and the like can be used as a main component. Also, for the purpose of adjustment of light emission efficiency and chromaticity of light emission, halides of one or more types of metal consisting of a group of sodium (Na), indium (In) and thallium (Tl) can be used as an auxiliary component.

As the first halide, not only the above examples but various known metal halides for light emission can be used according to the application of the metal halide discharge lamp.

For the second halide, a main component can be constituted by a plurality of types of metal halide selected from the following group. That is, the second halide can be one or more types of halides selected from magnesium (Mg), iron (Fe), cobalt (Co), chromium (Cr), zinc (Zn), nickel (Ni), manganese (Mn), aluminum (Al), antimony (Sb), beryllium (Be), rhenium (Re), gallium (Ga), titanium (Ti), zirconium (Zr) and hafnium (Hf). Any of the metals belonging to the above group has the characteristics under coexistence with the metal of the first halide that light emitting volume in the visible region is relatively smaller as compared with the first halide and its vapor pressure is relatively high. One or more types of halides selected from the group consisting of iron (Fe), zinc (Zn), manganese (Mn), aluminum (Al) and gallium (Ga) is particularly preferable. However, these metals are optimal when used as a main component, but the lamp voltage can be further raised by adding one or more types of metal selected from the group of magnesium (Mg), cobalt (Co), chromium (Cr), nickel (Ni), antimony (Sb), beryllium (Be), rhenium (Re), titanium (Ti), zirconium (Zr) and hafnium (Hf) as an auxiliary component. Also, any of the metals of the above group is basically adaptive even if the hermetic vessel is formed of any of silica glass and light-transmitting ceramics.

As halogen constituting the halide, iodine is the most suitable in halogens in terms of reactivity, and at least the above main light emitting metal is sealed mainly as iodides. However, if necessary, different halides such as iodides and bromides can be used at the same time for the purpose of restraining blackening of the inner surface of the hermetic vessel.

A rare gas acts as a start gas and a buffer gas of a metal halide lamp, and one or more types from a group of argon (Ar), krypton (Kr) and xenon (Xe) can be sealed singularly or in a mixed state. Since xenon has more atomic weight than other rare gases, which results in relatively small heat conductivity, sealing-in of 5 atmospheres or more of this gas contributes to formation of a lamp voltage immediately after lighting, and a vapor pressure of halides emits white visible light at a lower stage, which contributes to rising of a light flux. Thus, xenon is effective as a metal halide lamp for a head lamp. In this case, a preferable sealing-in pressure of xenon is 6 atmospheres or more, or more preferably in a range of 8 to 16 atmospheres. By this, the light flux rising immediately after lighting and the above standard of white light emission as an HID light source for an automobile head lamp can be both satisfied.

Moreover, reference shall be made to mercury. In the present invention, it is preferable that mercury (Hg) is not included at all from the viewpoint of reduction in environmental load substances but inclusion to an extent of an impurity is allowed.

In the present invention, the lighting mode of the metal halide discharge lamp is so-called dc lighting as mentioned above. That is, the polarity (polarity) of an electric current (lamp current) flowing in the hermetic vessel at lighting is not changed (constant) but a single polarity. And a high-frequency ripple current is superimposed on a current of a dc basic wave. The basic wave is obviously lower than the constant dc and the above high-frequency ripple current. It may be dc including a low-frequency ripple either at 50 or 60 Hz.

The waveform of the high-frequency ripple current to be superimposed can be any forms. For example, a sinusoidal wave, a saw-tooth wave, a triangular wave or a rectangular wave can be employed.

Moreover, a modulation degree by the high-frequency ripple current of the basic wave is not particularly limited, but as mentioned above, the larger the modulation degree is, the more the inter-electrode color temperature difference is reduced and that easily leads to straight arc lighting, which is preferable. Particularly, when the modulation degree is 30% or more, the inter-electrode color temperature difference can be drastically reduced, complete straight arc lighting can be achieved, and the center of the discharge arc matches the axis connecting the pair of electrodes. The modulation degree is a percentage of a value obtained by dividing a crest value of the high-frequency ripple current by a crest value of a current of the basic wave.

Moreover, for the frequency of the high-frequency ripple current, a frequency for straight arc lighting can be selected from a range of 20 to 260 kHz in general. In the above frequency range, when a specific maximum inner diameter is given, there are two frequencies or frequency regions to be straight arc lighting. The first of them is a predetermined frequency in a range of a relatively low first frequency f1 satisfying an equation 2 ($70 \leq f1 \leq 130$). The second of them is a predetermined frequency in a range of a relatively high second frequency f2 satisfying an equation 3 ($120 \leq f2 \leq 260$). Moreover, the first frequency f1 and the second frequency f2 are classified into narrower ranges according to the size of the maximum inner diameter of the hermetic vessel as shown in Table 1. Whether the frequency is selected based on the equation 3 or the Table 1, the second frequency f2 stabilizes the straightening action more surely and easily.

[Table 1]

| Maximum inner diameter of hermetic vessel (mm) | First frequency f1 (kHz) | Second frequency f2 (kHz) |
|---|---|---|
| 2.0 | 70 to 80 | 250 to 260 |
| 2.2 to 2.8 | 80 to 130 | 170 to 250 |
| 3.0 to 12.0 | 100 to 120 | 120 to 160 |

In the present invention, when the first and the second halides are used as the halide in the discharge medium, it becomes possible to reduce irregular color, that is, the inter-electrode color temperature difference to 3000K or less. Namely, when a color temperature in a range from the tip end of one of the electrodes to 1/8 of the distance between said pair of electrodes is $T_A(K)$ and the color temperature from the tip end of the other electrode to 1/8 of the distance between said pair of electrodes is $T_B(K)$ (however, $T_A > T_B$), the equation 1 can be satisfied.
[Equation 1]

$$T_A - T_B \leq 3000$$

Also, when the modulation degree of the superimposed high-frequency ripple current is set at 30% or more, the inter-electrode color temperature difference can be reduced to 2000K or less, which is a further preferable value.

When a desired light distribution characteristic is to be obtained using an optical system, it was found that the inter-electrode color temperature difference of not more than 3000K falls within an allowable range. For example, the white chromaticity standard of an automobile head lamp is substantially satisfied. The value is preferably 2000K or less.

Next, measurement of the inter-electrode correlated color temperature difference, which is a color temperature difference in the pair of electrodes, will be described. The inter-electrode correlated color temperature difference is a difference between values obtained by measurement of color temperatures of emitted light in the vicinity of the pair of electrodes, and the light emission region for measuring the color temperature is set at a distance from the tip end of the respective electrodes to the first 1/8 when the distance between said pair of electrodes is equally divided into 8 parts.

By defining the light emission region in this way, the light emission region can be easily measured using a slit of an appropriate size. For example, in the case of the metal halide discharge lamp for the automobile head lamp, since the distance between said pair of electrodes is 4.2 mm, light in the region from the electrode tip end to approximately 1/8 of the distance can be measured by using a slit with the width of 0.5 mm.

Then, in the metal halide discharge lamp of the present invention, the polarity of the lamp current flowing in the hermetic vessel is a single polarity, in other words, dc lighting becomes possible. Also, even if the lamp is for horizontal lighting, subjected to action of an acoustic resonance phenomenon by the high-frequency superimposed ripple current component, the discharge arc is corrected along the virtual straight direction connecting the electrodes, and the discharge arc is brought into a straight arc lighting state. Therefore, the present invention is particularly effective in the horizontal lighting, but not limited to this.

Therefore, vapor of the metal dissociated from halides in lighting generates electropheretic action according to its electronegativity and is drawn to the side of the cathode or anode. For example, in the case where scandium (Sc) and sodium (Na) as a major light emitting metal and zinc (Zn) as a major lamp voltage forming metal are sealed in the hermetic vessel, respectively, Sc and Na are drawn to the cathode and Zn to the anode.

When the metal vapor is moved by the above electropheretic action, concentration of the metal vapor on the side of the electrode is increased, which causes concentration distribution in the hermetic vessel. When the concentration distribution is generated, the metal vapor with relatively high concentration region is diffused to the portion with low concentration according to the concentration gradient. As a result, movement according to the electropheretic action and the concentration gradient is inevitably counterbalanced and an appropriate concentration distribution remains in the hermetic vessel. The larger the concentration gradient is, the higher the speed of the concentration diffusion becomes.

When the straight arc lighting state is brought about and the discharge arc becomes straight along the virtual straight line connecting the electrodes, the distance between said pair of electrodes is effectively reduced, and a vector of the concentration diffusion is increased for that amount. Also, when the discharge arc becomes straight as above, the vector of the concentration diffusion in the vicinity of the electrode is constituted mainly by a component in the inter-electrode virtual straight line direction, that is, the axial direction, the concentration diffusion is promoted and the uniformity in the tube axis direction of the partial pressure distribution of metal vapor becomes favorable. As a result, it is considered that the inter-electrode color temperature difference is remarkably reduced.

On the other hand, in the configuration of dc lighting but not straight arc lighting (hereinafter referred to as non-straight arc lighting), since the discharge arc is curved upward, the distance between said pair of electrodes gets effectively longer. Also, since the vector of the concentration diffusion of metal vapor is inclined upward in the vicinity of the electrode, the component in the inter-electrode virtual straight direction, that is, the axial direction becomes smaller. As a result, it is considered that the inter-electrode color temperature difference is relatively increased.

The metal halide discharge lamp system including the metal halide discharge lamp of the present invention comprises the metal halide discharge lamp described as above and an operating circuit supplying an electric current having a frequency component generating an acoustic resonance phenomenon in a direction crossing the straight line connecting the electrodes of the metal halide discharge lamp to the metal halide discharge lamp for lighting.

In this system, the operating circuit is preferably computerized and configured so that an electric current of 2.5 times or more of a rated lamp current is supplied for several seconds, preferably 3 to 5 seconds immediately after the metal halide discharge lamp is lighted and the electric current is reduced as time elapses. Also, the circuit may be configured so that the modulation degree of the high-frequency ripple current superimposed on the dc basic wave as desired can be adjusted continuously or in steps.

A mode for carrying out the present invention will be described below referring to the attached drawings.

<First mode>

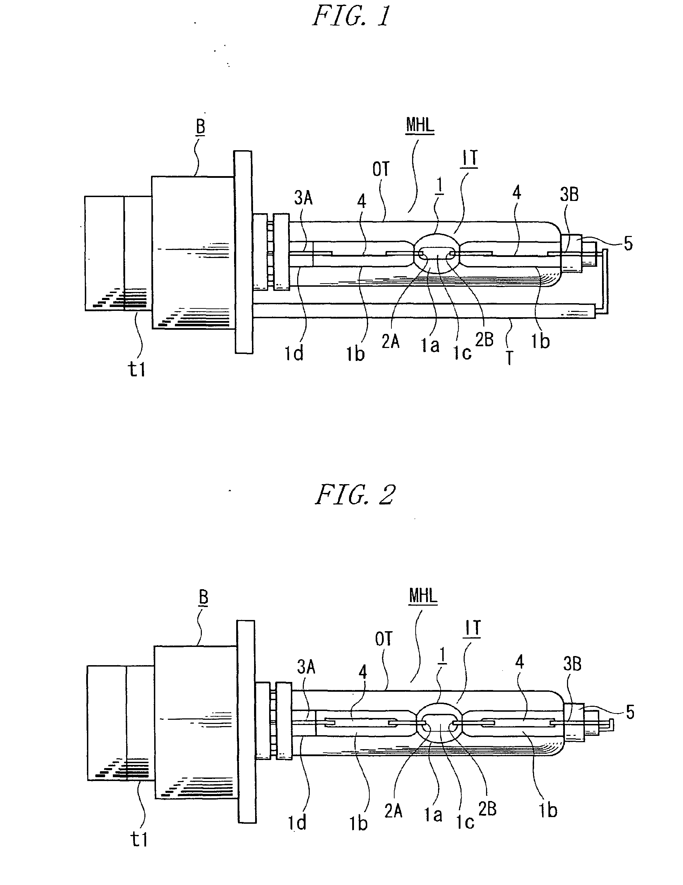

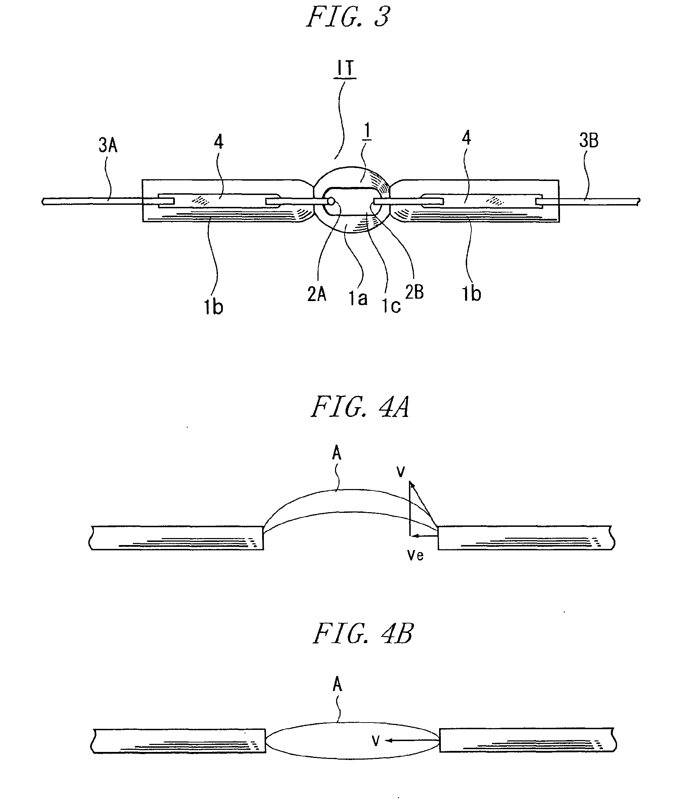

Figs. 1 to 4 show a metal halide lamp for an automobile head lamp as a first mode for putting the metal halide lamp of the present invention into practice. Fig. 1 is a front view of an entire lamp, Fig. 2 is a plan view, Fig. 3 is an enlarged front view of light emitting tube, and Fig. 4 is a schematic diagram for explaining a relation between the shape of a discharge arc and a vector of concentration diffusion in comparison with a comparative example of non-straight arc lighting. A metal halide lamp MHL in the first mode is configured so that a high-frequency ripple current of a predetermined frequency superimposed on the dc basic wave flows at lighting, and comprises a light emitting tube IT, an insulating tube T, an outer tube OT and a base B.

The light emitting tube IT is provided with an hermetic vessel 1, a pair of electrodes 2A, 2B, a pair of external lead-in wires 3A, 3B and a discharge medium.

The hermetic vessel 1 is made of silica glass and has the following configuration. That is, a surrounding portion 1a and a pair of sealing portions 1b are provided. The surrounding portion 1a has an outer shape molded in a spindle shape and the pair of elongated sealing portions 1b, 1b on its both ends, while an elongated and substantially columnar discharge space 1c is formed inside. The inner volume of the discharge space 1c is approximately 0.025 cc. Since the discharge space 1c is substantially columnar and elongated, it can relatively easily approach the discharge arc, and the temperature rise at an upper part of the hermetic vessel 1 is expedited.

Also, the surrounding portion 1a has a relatively large thickness. That is, it has the thickness substantially at the center portion of the distance between said pair of electrodes larger than the thickness on its both sides. Thus, since the heat conduction of the hermetic vessel 1 becomes favorable and temperature rise of the discharge medium adhering to the inner face of the lower part and the side part of the discharge space 1c of the hermetic vessel 1 is expedited, rising of the light flux is quickened.

The pair sealing portions 1b, 1b seal the surrounding portion 1a and loosely support shaft portions of the pair of electrodes 2A, 2B, which will be described later, which contributes to hermetic leading-in of an electric current from an operating circuit to the electrodes, and they extend integrally from both ends of the surrounding portion 1a. And in order to seal the pair of electrodes 2A, 2B and to lead in the electric current from the operating circuit to the electrode 1b in an hermetic manner, a sealing metal foil 4 as appropriate hermetic sealing and leading-in means is embedded inside in an hermetic manner.

The sealing metal foil 4 is made of molybdenum foil and embedded in the sealing portion 1b of the hermetic vessel 1 in an hermetic manner. The sealing metal foil 4 is embedded inside the sealing portion 1b of the hermetic vessel 1 and functions as an electric current conducting conductor in cooperation so that the sealing portion 1b keeps the inside of the surrounding portion 1a of the hermetic vessel 1 hermetic. A method for embedding the sealing metal foil 4 in the sealing portion 1b is not particularly limited, but a reduced pressure sealing method, a pinch seal method or the like can be employed, for example. When 5 atmospheres or more of a rare gas such as xenon (Xe) is to be sealed, the both can be applied in combination.

The electrode 2A functions as an anode and comprises an electrode shaft potion 2a and an electrode main portion 2b. The electrode shaft potion 2a is comprised by doped tungsten with the diameter of 0.35 mm. The electrode main portion 2b is, as shown in Fig. 3 in an enlarged manner, formed integrally at the tip end of the electrode shaft portion 2a and in a spherical state with the diameter of 0.6 mm.

The electrode 2B functions as a cathode and comprises an electrode shaft potion 2a and an electrode main portion 2b similarly to the electrode 2A. The electrode shaft potion 2a and the electrode main portion 2b are made of a single thoriated tungsten rod with the diameter of 0.35 mm, a tip end portion becomes the electrode main portion, and the other portions becomes the electrode shaft portion.

The thoriated tungsten contains 1 mass % of thorium oxide.

Then, the pair of electrodes 2A, 2B have their electrode shaft portions 2a welded to the sealing metal foil 4 at the base ends, the intermediate portions loosely supported by the sealing portion 1b and the tip end portion and the electrode main portion 2b exposed in the discharge space 1c of the surrounding portion 1a in the hermetic vessel 1. In the surrounding portion 1a of the hermetic vessel 1, they are sealed inside the both ends in the axial direction while being separated and opposed, and the distance between said pair of electrodes is set to be a predetermined value.

In Fig. 1, after the left sealing portion 1b is formed, a part of the sealing tube 1d is not cut away but integrally extended in the tube axis direction from the end of the sealing portion 1b into the base B.

The pair of external lead-in wires 3A, 3B are disposed for supplying power to the pair of electrodes 2A, 2B. The tip ends of the pair of external lead-in wires 3A, 3B are welded to the other end of the sealing metal foil 4 in the sealing portion 1b at the both ends of the hermetic vessel 1 and the base end side is led out to the outside. In Fig. 1, the external lead-in wire 3B led out of the hermetic vessel 1 to the right is folded at the intermediate portion along the outer tube OT, which will be described later, led into the base B, which will be described later, and connected to one base terminal t1, not shown. Also, in Fig. 1, the external lead-in wire 3A led out from the hermetic vessel 1 to the left is extended along the tube axis, led into the base B and connected to the other of the base terminals (not shown).

The discharge medium is sealed in the discharge space 1c formed inside the hermetic vessel 1 and contains a first halide made of a metal halide which contributes mainly to light emission, a second halide made of a metal halide which contributes mainly to formation of a lamp voltage, and a rare gas.

The outer tube OT has an ultraviolet-ray cutting function and accommodates the light emitting tube IT inside and its reduced diameter portions 5 at the both ends are glass-welded to the sealing portions 1b of the hermetic vessel 1. However, the inside is not hermetic but communicates with the outside air.

The insulating tube T covers the folded portion of the external lead-in wire 3B.

The base B is standardized for an automobile head lamp, in which the light emitting tube IT and the outer tube OT are planted along the center axis and supported, and configured so that it is detachably attached to the back face of the automobile head lamp.

A state of the discharge arc when the metal halide discharge lamp of the present invention is straight-arc lighted by dc (hereinafter referred to as dc straight-arc lighting) is shown in Fig. 4B. Metal vapor generated by dissociation of metal from the halide in the discharge medium is drawn to the cathode or the anode according to the electronegativity of the metal by electropheretic action in a discharge arc A. The metal vapor drawn to the electrode is diffused by concentration diffusion toward the opposite polarity side, but since a vector V of the concentration diffusion shown by an arrow in the figure is faced to the opposite polarity side along the virtual straight line connecting the electrodes, the vector V of the concentration diffusion effectively acts in improvement of uniformity of the partial pressure distribution of the metal vapor.

On the other hand, in the case of a comparative example of non-straight arc lighting by dc (hereinafter referred to as dc non-straight arc lighting), as shown in Fig. 4A, the discharge arc A is curved. Therefore, the vector V of the concentration diffusion of the metal vapor is inclined upward with the electrode as a starting point as indicated by the arrow in the figure, and then, an effective component $V_E$ acting in improvement of the uniformity of the concentration distribution of the metal vapor toward the opposite polarity side becomes small.

Next, before explaining an embodiment in the first mode, the comparative example will be described first. The following comparative example 1 is configured similarly to the first mode of the present invention shown in Fig. 1, except the configuration of the pair of electrodes.

[Comparative example 1]

Light emitting tube IT

Hermetic vessel 1: Made of silica glass, spherical length 7 mm, maximum outer diameter 6 mm, the discharge space is substantially in the columnar shape with the maximum inner diameter of 2.6 mm.

Electrodes 2A, 2B: A rod-state electrode with the same diameter up to the tip end is used, and distance between said pair of electrodes is 4.2 mm

Discharge medium

First halide: $ScI_3$ 0.10 mg + NaI 0.25 mg

Second halide: $ZnI_2$ 0.15 mg

Rare gas: Xe 10.5 atmospheres

Outer tube OT: Inner atmosphere is atmospheric pressure (outside air)

Lamp power at stability: 35 W

Lighting direction: Horizontal lighting

Lamp current: Basic wave - ac rectangular wave, lighted while varying the modulation degree of superimposed high-frequency ripple current with a frequency capable of straight-arc lighting.

[Comparative example 2]

In the same specification as the Comparative example 1, mercury 0.5 mg is sealed instead of the second halide. In the Comparative example 1, availability of the straight arc lighting is examined by changing the modulation degree of the superimposed high-frequency ripple current by 10% from 0 to 90%. The result is shown in Table 2. In the table, Y stands for presence of straight-arc lighting and N for absence of straight-arc lighting.

[Table 2]

| Modulation degree (%) | 0 | 10 | 20 | 30 | 40 | 50 | 60 | 70 | 80 | 90 |
|---|---|---|---|---|---|---|---|---|---|---|
| Comparative example 1 | N | Y | Y | Y | Y | Y | Y | Y | Y | Y |
| Comparative example 2 | N | N | N | Y | Y | Y | Y | Y | Y | Y |

As can be understood from Table 2, the straight-arc lighting is more easily available in Comparative example 1 than in Comparative example 2 even if the modulation degree is small. That is because the metal vapor in Comparative example 1 is lighter than that in Comparative example 2 containing mercury since it does not contain mercury and even if a stress generated by acoustic resonance and acting on the discharge arc is small, it effectively acts on straight-arc. This means that the mercury-free metal halide discharge lamp is capable of straight-arc lighting more easily.

Next, for ac straight arc lighting with the modulation degree of 30% in the lamp of Comparative example 1 (hereinafter referred to as ac straight-arc lighting) and for ac non-straight arc lighting (hereinafter referred to as dc non-straight arc lighting) in Comparative example 3, results on total flux maintenance ratio after continuous lighting for 1000 hours, white turbidity amount and Na irradiation power maintenance ratio will be shown in Table 3. The white turbidity amount here is a percentage of a value obtained by dividing a surface area of a portion opposed to a white turbidity portion existing in the hermetic vessel by a surface area of the entire hermetic vessel. The Na irradiation power maintenance ratio is a percentage of a value obtained by dividing Na irradiation power after a predetermined lighting time by Na irradiation power at 0 hour after lighting. The above definitions apply to the following.

[Comparative example 3]

Configuration that the lamp in Comparative example 1 is given ac non-straight arc lighting with the modulation degree of 0 %

[Table 3]

| Category | Lighting mode | Total flux maintenance ratio (%) | White turbidity amount (%) | Na irradiation power maintenance ratio (%) |
|---|---|---|---|---|
| Comparative example 1 | Ac straight arc lighting | 60 | 25 | 55 |
| Comparative example 3 | Ac non-straight arc lighting | 40 | 55 | 35 |

As can be understood from Table 3, even in the case of ac straight arc lighting as in Comparative example 1, the total flux maintenance ratio, white turbidity amount and Na irradiation power maintenance ratio are all more excellent than ac non-straight arc lighting in Comparative example 3. Therefore, the life is improved. This is because the temperature at a highest temperature portion formed at an upper part of the hermetic vessel is lowered by straight arc lighting. On the other hand, in the case of ac non-straight arc lighting as in Comparative example 3, the temperature is raised by the curved discharge arc.

Next, examples in the first mode of the present invention will be described.

Example 1

This Example is a lamp with the same specification as the Comparative example 1 except that, in addition to the dc straight arc lighting, the diameter of the electrode main portion of the anode is changed to be larger than the electrode shaft portion and an electron emissive substance is added to the cathode. It is configured that the high-frequency ripple current is superimposed on the basic wave of smoothed dc by the modulation degree of 30% as a mode of the above dc straight arc lighting. Data of Comparative example 1 is also shown for comparison.

Results of examination of the total flux maintenance ratio, the white turbidity and Na irradiation power maintenance ratio after continuous lighting for 1000 hours for Example 1 and Comparative example 1, respectively, are shown in Table 4.

[Table 4]

| Category | Lighting mode | Total flux maintenance ratio (%) | White turbidity amount (%) | Na irradiation power maintenance ratio (%) |
|---|---|---|---|---|
| Example 1 | Dc straight arc lighting | 80 | 5 | 70 |
| Comparative example 1 | Ac straight arc lighting | 60 | 25 | 55 |

As can be understood from Table 4, Example 1 is superior to Comparative example 1 all in the total flux maintenance ratio, white turbidity amount and Na irradiation power maintenance ratio. This is because the dc straight arc lighting is better than the ac straight arc lighting for the following reasons.

That is, in the case of the dc straight arc lighting, since the polarity of the lamp current flowing in the hermetic vessel at the straight arc lighting is a single polarity not changing with time, life characteristics is improved as compared with the ac straight arc lighting. Also, in the case of the ac lighting, white turbidity and Na missing occur on both sides of the pair of electrodes, while in the case of the dc lighting, since the metal halide is moved to the cathode side, little white turbidity or Na missing occur on the anode side, and there is less influence of the white turbidity and Na missing in the entire lamp.

Next, results of examination on the case of dc straight arc lighting of the lamp of Example 1 by the modulation degree of 30% and the inter-electrode color temperature difference in Comparative example 4 will be shown in Table 5.

[Comparative example 4]

Configuration that the same lamp as in Example 1 is given dc non-straight arc lighting by the modulation degree of 0%

[Table 5]

| Category | Lighting mode | Inter-electrode color temperature difference (K) |
|---|---|---|
| Example 1 | Dc straight arc lighting | 2400 |
| Comparative example 1 | Dc non-straight arc lighting | 3600 |

As can be understood from Table 5, in the present invention, the inter-electrode color temperature difference is smaller than Comparative example 4. That is because Sc, Na are drown to the cathode and Zn to the anode by the electropheretic action in dc lighting as mentioned above, but since the vectors of the respective concentration diffusion from the cathode and the anode are in the tube axis direction, the concentration diffusion of the metal vapor is increased and thus, color variation between the electrodes is considered to be reduced. That is, in the case of mercury-free dc straight arc lighting, the inter-electrode color temperature difference is remarkably reduced.

Moreover, in the lamp of Example 1, results of examination on curvature degrees of the discharge arc and the inter-electrode color temperature difference when the modulation degree of the high-frequency ripple current is changed are shown in Table 6. The curvature degree of the discharge arc is represented by a distance r (mm) between the center of the discharge arc and the axis between the electrodes at the center between the pair of electrodes.

[Table 6]

| Modulation degree (%) | r (mm) | Inter-electrode color temperature difference (K) |
|---|---|---|
| 0 | 1.0 | 3600 |
| 10 | 0.6 | 2500 |
| 20 | 0.2 | 1800 |
| 30 | 0.0 | 1000 |
| 40 | 0.0 | 800 |
| 50 | 0.0 | 700 |

As can be understood from Table 6, by setting the modulation degree at 30% or more, complete dc straight arc lighting is obtained, and the inter-electrode color temperature difference becomes 1000K or less.

Next, results of examination on availability of straight arc lighting are shown in Table 7 when the high-frequency ripple current with the constant modulation degree of 30% is superimposed on a direct current with a smooth basic wave using the lamp in Example 1 and the ripple frequency is changed by 20 kHz from 70 to 190 kHz and to 200 kHz in addition. In the table, Y stands for presence of straightening, N for absence of straightening, f1 for the first frequency, and f2 for the second frequency, respectively. Determination for presence of straightening shall be made when the center of the discharge arc is corrected within 0.3 mm from the axis connecting the electrodes at the center position between the electrodes.

[Table 7]

| Ripple frequency (kHz) | Result | Evaluation |
|---|---|---|
| 70 to 110 | N | Not available |
| 130 | Y | Available as f1 |
| 150 to 190 | N | Not available |
| 200 | Y | Available as f2 |

As shown in Table 7, in this Example, straight arc lighting is available with two frequencies of 130 kHz and 200 kHz.

Next, using the lamp in the following Example 2, waveforms of the high-frequency ripple current was examined. As a result, straight arc lighting is possible for any of a sinusoidal wave, a triangular wave, a rectangular wave, a saw-tooth wave, a stepped wave and exponential wave.

Example 2

Discharge medium
First halide: InI0.5 mg
Second halide: None
The others are the same as example 1.
In the lamp of Example 2, results of examination on the curvature degree of the discharge arc and the inter-electrode color temperature difference when the modulation degree of the high-frequency ripple current is changed are shown in Table 8.

[Table 8]

| Modulation degree (%) | r (mm) | Inter-electrode color temperature difference |
|---|---|---|
| 0 | 1.6 | 3500 |
| 10 | 0.6 | 2400 |
| 20 | 0.2 | 1800 |
| 30 | 0.0 | 1100 |
| 40 | 0.0 | 90 |
| 50 | 0.0 | 80 |

As can be understood from Table 8, by setting the modulation degree at 30% or more, complete dc straight arc lighting can be realized, and the inter-electrode color temperature difference falls to 1000K or less. The light emission of In has a resonance line of 410.4 nm, 451.1 nm, but if its partial pressure is increased, the light emission line is broadened and a continuous line is generated over the entire visible region. Therefore, a correlated color temperature is lowered. In the case of dc lighting, both the cathode side and the anode side have light emission of only In, but since the In partial pressure is higher on the cathode side, the correlated color temperature is low, while since the anode side has a low In partial pressure, the correlated color temperature is high. As a result, color irregularity is generated. However, by dc straight arc lighting, because of reduced effective length of the discharge arc and the vector of the concentration gap in the tube axis direction, the concentration diffusion from the cathode gets large, the In partial pressure between the electrodes is made uniform, and the inter-electrode color temperature difference, that is, color irregularity is reduced.

<Second mode>

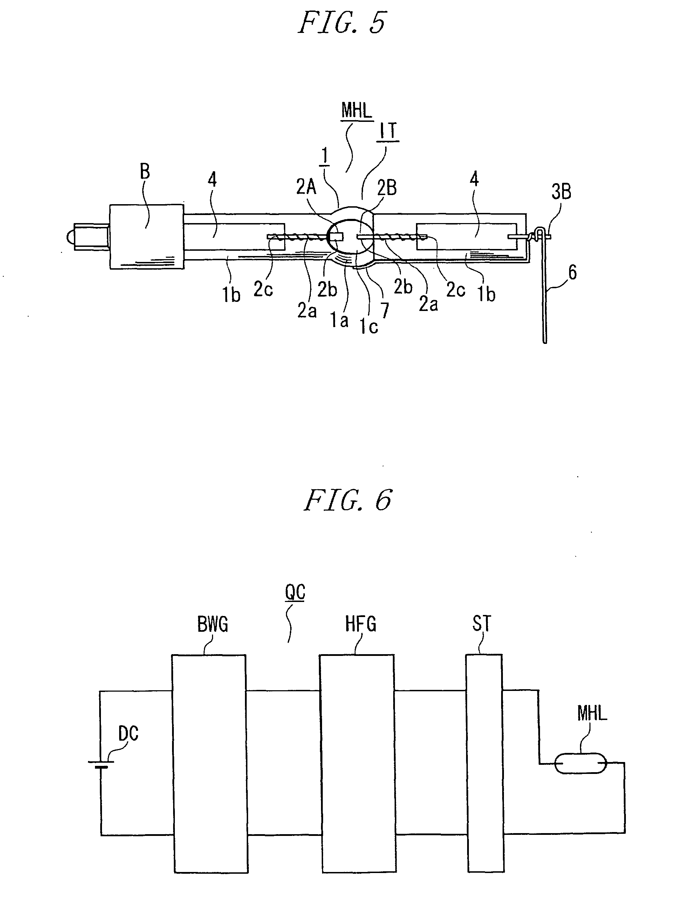

Fig. 5 is an enlarged front view of a light emitting tube illustrating a metal halide lamp for a liquid crystal projector as a second mode for putting the metal halide lamp of the present invention into practice. In this figure, the same portions as those in Figs. 1 to 3 are given the same reference numerals and the description will be omitted. In the figure, reference numeral 6 denotes a lead member and 7 a proximal conductor.

The hermetic vessel 1 is made of silica glass and the surrounding potion 1a is formed in a substantially spherical oval sphere.

The electrode 2A acting as an anode is made of doped tungsten and provided with the electrode shaft portion 2a, the electrode main portion 2b and a holding-in coil portion 2c. The electrode shaft portion 2a is a rod with the diameter of 0.7 mm. Its base end is welded to the sealing metal foil 4, which will be described later, with an intermediate portion loosely supported by the sealing portion 1b and the tip end portion is exposed inside the surrounding portion 1a of the hermetic vessel 1. The electrode main portion 2b has the diameter of 1.4 mm and length of 3.5 mm and is integrally formed at the tip end of the electrode shaft portion 2a. The holding-in coil portion 1c is wrapped at a portion opposed to a holding-in portion of the doped tungsten line at least by silica glass of the sealing portion 1b at the intermediate portion of the electrode shaft portion 2a with an appropriate pitch.

The electrode 2B acting as a cathode is provided with the electrode shaft portion 2a, the electrode main portion 2b and the holding-in coil portion 2c. The electrode shaft portion 2a is comprised by a single tungsten rod containing 1.0 mass % of thorium oxide with the diameter of 0.7 mm. Its base end is welded to the sealing metal foil 4, which will be described later, with the intermediate portion loosely supported by the sealing portion 1b, and the tip end portion is projected into the surrounding portion 1a of the hermetic vessel 1. The electrode main portion 2b is formed by the tip end portion itself of the electrode shaft portion 2a. The holding-in coil portion 1c is wrapped at a portion opposed to a holding-in portion of the doped tungsten line at least by silica glass of the sealing portion 1b at the intermediate portion of the electrode shaft portion 2a with an appropriate pitch.

The discharge medium is made from the first and second halides and the rare gas and sealed in the surrounding portion 1a.

The base B is connected to the conducting conductor 3A, not shown, and fixed to the sealing portion 1b by an inorganic adhesive to be used when the light emitting tube IT is mounted to a known reflecting mirror and connected to one of poles of the operating circuit, not shown.

The lead member 6 has its tip end portion connected to the lead-in conductor 3B on the right in the figure and the base end portion is connected to the other pole of the operating circuit.

The proximal conductor 7 has its tip end portion extended to a position proximal to the electrode 2A on the left in the figure, while the base end portion is connected to the lead-in conductor 3B on the right in the figure.

Next, before explaining an embodiment in the second mode, a comparative example will be described first. The following Comparative example 5 has the same configuration as the second mode of the present invention shown in Fig. 5 except the configuration of the pair of electrodes.

[Comparative example 5]

Light emitting tube IT

Hermetic vessel 1: Made of silica glass, maximum outer diameter 6.0 mm
Electrodes 2A, 2B: An electrode with the same structure is used, distance between said pair of electrodes is 2.0 mm
Discharge medium
First halide: $DyI_3$ 0.5 mg + $NdI_3$ 5 mg
Second halide: $ZnI_2$ 2.0 mg
Rare gas: Ar 1.0 atmospheres
Lamp power at stability: 150 W
Lighting direction: Horizontal lighting
Lamp current: Basic wave - ac rectangular wave, lighted by varying the frequency of superimposed high-frequency ripple current.

[Comparative example 6]

In the same specification as the Comparative example 5, mercury 0.5 mg is sealed instead of the second halide.

In the Comparative examples 5 and 6, availability of the straight arc lighting is examined by changing the modulation degree of the superimposed high-frequency ripple current by 10% from 0 to 90%. The result is shown in Table 9. In the table, Y stands for presence of straight-arc lighting and N for absence of straight-arc lighting.

[Table 9]

| Modulation degree (%) | 0 | 10 | 20 | 30 | 40 | 50 | 60 | 70 | 80 | 90 |
|---|---|---|---|---|---|---|---|---|---|---|
| Comparative example 5 | N | Y | Y | Y | Y | Y | Y | Y | Y | Y |
| Comparative example 6 | N | N | N | Y | Y | Y | Y | Y | Y | Y |

As can be understood from Table 9, the straight-arc lighting is more easily available in Comparative example 5 than in Comparative example 6 even if the modulation degree is small. The reason is the same as that for Comparative example 1.

Next, Comparative examples 7 and 8 will be described. Results of examination of the total flux maintenance ratio and white turbidity amount after Comparative examples 7 and 8 are continuously lighted for 1000 hours, respectively, are shown in Table 10.

[Comparative example 7]

Configuration that the lamp in Comparative example 5 is given ac straight arc lighting with the high-frequency ripple current superimposed on the basic wave of a rectangular wave ac by the modulation degree of 30%

[Comparative example 8]

Configuration that the lamp in Comparative example 5 is given ac non-straight arc lighting with the basic wave of a rectangular wave ac by the modulation degree of 0%

[Table 10]

| Category | Lighting mode | Total flux maintenance ratio (%) | White turbidity amount (%) |
|---|---|---|---|
| Comparative example 7 | Ac straight arc lighting | 60 | 30 |
| Comparative example 8 | Ac non-straight arc lighting | 40 | 65 |

As can be understood from Table 10, the total flux maintenance ratio and white turbidity amount of the Comparative example 7 are more excellent than Comparative example 8. Therefore, even in the case of ac straight arc lighting, life is improved as compared with the non-straight arc lighting in the case of mercury-free. The reason is the same as that for Table 3.

Example 3

In this Example, as the second mode shown in Fig. 5, in a lamp with the same specification as Comparative example 5 except that the electrode structure is changed so that the diameter of the electrode main portion on the anode becomes larger than the electrode shaft portion and an electron emissive substance is added to the cathode, the high-frequency ripple current is superimposed on the basic wave of a smoothed dc by the modulation degree of 30% for dc straight arc lighting. Comparative example 5 is also shown for comparison.

Then, results of the examination on the total flux maintenance ratio, white turbidity and Na irradiation power maintenance ratio after continuous lighting for 1000 hours for example 3 and Comparative example 5, respectively, are shown in Table 4.

[Table 11]

| Category | Lighting mode | Total flux maintenance ratio (%) | White turbidity amount (%) |
|---|---|---|---|
| Example 3 | Dc straight arc lighting | 80 | 5 |
| Comparative example 5 | Ac straight arc lighting | 60 | 30 |

As can be understood from Table 11, the total flux maintenance ratio and white turbidity amount of the Comparative example 3 are more excellent than Comparative example 5. The reason is the same as that for example 1 and Comparative example 1 shown in Table 4.

Next, results of the examination on inter-electrode color temperature difference in Example 3 and Comparative example 9 will be shown in Table 12.

[Comparative example 9]

Configuration that the same lamp as Example 3 is given dc non-straight arc lighting

[Table 12]

| Category | Lighting mode | Inter-electrode color temperature difference (K) |
|---|---|---|
| Example 3 | Dc straight arc lighting | 2300 |
| Comparative example 9 | Dc non-straight arc lighting | 3400 |

As can be understood from Table 12, Example 3 is superior to Comparative example 9. That is because the discharge arc becomes straight by straight arc lighting similarly to Table 5, the vector of the concentration diffusion of metal vapor is along the tube axis, and the effective length of the distance between said pair of electrodes is reduced. Thus, the influence of the concentration diffusion is more easily reflected and uniformity of the metal vapor distribution is improved.

Results of the examination on the curvature degree of the discharge arc and the inter-electrode color temperature difference when the modulation degree of the high-frequency ripple current is changed using the lamp in Example 3 are shown in Table 13.

[Table 13]

| Modulation degree (%), | r (mm) | Inter-electrode color temperature difference (K) |
|---|---|---|
| 0 | 2.0 | 3400 |
| 10 | 1.2 | 2200 |
| 20 | 0.4 | 1700 |
| 30 | 0.0 | 1000 |
| 40 | 0.0 | 900 |
| 50 | 0.0 | 700 |

As can be understood from Table 13, by setting the modulation degree at 30% or more, complete dc straight arc lighting is obtained and the inter-electrode color temperature difference falls to 1000K or less.

Moreover, results of measurement of screen illuminance when the lamp in Example 3 is incorporated as a light source of a liquid crystal projector and light emission is projected to a screen by an optical system are shown in Table 14 in comparison with the case where Comparative example 9 is configured similarly.

[Table 14]

| Category | Lighting mode | Relative screen illuminance (%) |
|---|---|---|
| Example 3 | Dc straight arc lighting | 135 |
| Comparative example 9 | Dc non-straight arc lighting | 100 |

As can be understood from Table 14, Example 3 has higher screen illuminance than Comparative example 9. That is because a light amount incident to the optical system is increased by the dc straight arc lighting as compared with the dc non-straight arc lighting.

\<Third mode\>

Fig. 6 is a circuit block diagram illustrating a mode for putting the metal halide discharge lamp system of the present invention into practice. In this figure, the metal halide discharge lamp system comprises a metal halide discharge lamp MHL, an operating circuit OC, and a starting circuit ST. The operating circuit OC is provided with a basic waveform generation circuit BWG and a high-frequency component superimposition circuit HFG.

The metal halide discharge lamp MHL is comprised by the lamp of the first mode shown in Figs. 1 to 3 or of the second mode shown in Fig. 4.

The operating circuit OC is a circuit for maintaining lighting by biasing the metal halide discharge lamp MHL and includes appropriate limiting impedance connected to the metal halide discharge lamp MHL in series. The biasing of the metal halide discharge lamp MHL is carried out by supplying a voltage, current or power in a mode where a basic waveform is superimposed with a high frequency in ac or dc to the lamp.

As the above high frequency, a frequency that the discharge arc of the discharge medium in the lamp is corrected to the straight direction connecting the electrodes using the acoustic resonance phenomenon is selected. That is, such a frequency that, by supplying the voltage, current or power of the above frequency to the lamp, the acoustic resonance phenomenon is generated in a direction crossing the straight line connecting the electrodes and as a result, the discharge arc is corrected to a substantially straight state. Such a frequency is equal to an acoustic resonance frequency determined by a sonic speed of the discharge medium existing in the discharge space of the metal halide discharge lamp and the length of the discharge space in a direction crossing the straight line connecting the electrodes. Alternatively, the high-frequency may be in a mode that the frequency is changed within a predetermined range including the above acoustic resonance frequency.

Also, the waveform of the high-frequency voltage, current or power is a waveform whose instantaneous value is changed with time and can be selected from a sinusoidal wave, a triangular wave, a saw-tooth wave, a stepped wave, an exponential wave and a complex wave of two or more of them. The basic waveform portion of the current supplied to the lamp mainly supplies energy generating the discharge arc. Also, the basic wave allows an appropriate waveform such as a rectangular wave and a sinusoidal wave.

The operating circuit OC is provided with a dc power source DC, the basic waveform generation circuit BWG, and the high-frequency component superimposition circuit HFG.

The dc power source DC functions as a dc power source for the basic waveform generation circuit BWG and the high-frequency component superimposition circuit HFG. The dc power source DC can be comprised by a rectified dc power source that obtains a direct current by rectifying a low-frequency ac and a battery power source.

The basic waveform generation circuit BWG generates ac or dc voltage, current or power as the above basic wave. In the case of ac, this can be generated by using an inverter. A dc - dc conversion circuit such as a dc chopper may be set before the inverter as desired. By this, the ac voltage, current or power can be controlled more easily. On the other hand, in the case of dc, a dc - dc conversion circuit such as a dc chopper can be used for generating this.

The high-frequency component superimposition circuit HFG generates the above high frequency to be superimposed on the basic wave. This can be comprised by an inverter, for example.

The operating circuit OC includes the limiting impedance connected to the metal halide discharge lamp MHL in series as mentioned above, but as the limiting impedance, inductance with an appropriate value is preferably used by using an inductor, for example.

Moreover, the operating circuit OC can be comprised by a lamp current slope control characteristic that a lamp current more than a rated lamp current is supplied immediately after start of the metal halide discharge lamp MHL and the lamp current is sequentially reduced as time elapses to be settled at a rated current. This configuration is suitable for lighting of the metal halide discharge lamp used for a head lamp for a vehicle.

Furthermore, the operating circuit OC is allowed to be comprised by feedback control circuit means that detects a lamp characteristic of the metal halide discharge lamp MHL and matches the frequency of the high-frequency component to be superimposed on the basic wave component with the acoustic resonance frequency.

The starting circuit ST generates a high-voltage pulse or the like at start of the metal halide discharge lamp MHL and applies it to the lamp so as to facilitate the starting. Therefore, the starting circuit ST is preferably disposed between the metal halide discharge lamp MHL and the limiting impedance.

Then, in the metal halide discharge lamp system of this mode, the discharge medium in the metal halide discharge lamp does not essentially contain mercury, and though the discharge arc is easy to be curved more strongly than the metal halide discharge lamp containing mercury, because of the above-mentioned configuration, a stationary wave by the acoustic resonance is formed in a direction crossing a virtual straight line connecting the electrodes and the discharge arc is corrected to substantially straight state along the above straight direction.

The reason why the discharge arc is corrected to substantially straight state is considered as follows. That is, by periodic fluctuation of the voltage, current or power supplied to the metal halide discharge lamp MHL, a periodic fluctuation of a gas pressure occurs in the discharge arc. The periodic fluctuation of the gas pressure progresses from the entire circumferential direction of the tube axis toward the inner wall surface of the hermetic vessel 1 as a compressional wave (traveling wave), is reflected by the inner wall surface and becomes a reflective wave. Thus, in the vicinity of the discharge arc, the traveling wave collides with the reflected wave and if there is a difference between displacements of the both waves, the discharge arc is considered to be moved to a position where the displacements of the both waves are smaller and corrected to substantially straight state.

When the voltage, current or power of the acoustic resonance frequency, which is a high frequency, is supplied to the metal halide discharge lamp MHL, in the section of the discharge space in the direction crossing the virtual straight line connecting the electrodes, at a position where the discharge arc is equidistant to the inner wall surface of the surrounding portion (if the section is a circle, at the center of the circle, for example), the displacements of the traveling wave and the reflected wave can be controlled at the same level in the vicinity including the discharge arc, and as a result, stable lighting is enabled without movement of discharge arc. At this time, the two compressional waves (traveling wave and reflected wave) interfere with each other in the above section and a stationary wave is generated.

When the length of the discharge space in the direction crossing the discharge arc is set as the length of the section crossing the virtual straight line connecting the electrodes, the discharge arc is not moved but is stabilized at the center of the section equidistant to the inner surface of the surrounding portion, and the shape of the discharge arc becomes straight.

**Claims**

1. A metal halide discharge lamp comprising:

    a fire-resistant and light-transmitting hermetic vessel;
    a pair of electrodes sealed within the hermetic vessel; and
    a discharge medium containing a halide and a rare gas and essentially not containing mercury and sealed within the hermetic vessel,
    wherein a polarity of a lamp current flowing in the hermetic vessel is a single polarity not changing with time and the lamp is lighted so that a discharge arc of the discharge medium is corrected in a direction of a straight line connecting the electrodes using an acoustic resonance phenomenon.

2. The metal halide discharge lamp according to claim 1, wherein a color temperature in a range from the tip end of one of the electrodes to 1/8 of the distance between said pair of electrodes is $T_A(K)$ and the color temperature in a range from the tip end of the other electrode to 1/8 of the distance between said pair of electrodes is $T_B(K)$ (however, $T_A > T_B$), an equation 1 is satisfied:

$$[\text{Equation 1}]$$

$$T_A - T_B \leq 3000$$

3. The metal halide discharge lamp according to claim 1 or 2, wherein the lamp current has a high-frequency ripple current superimposed on a dc basic wave.

4. A metal halide discharge lamp, wherein a discharge arc is stably corrected into a straight state even if the lamp is lighted when an electric current superimposed with a ripple current with either of a predetermined frequency in a range of a relatively low first frequency f1 satisfying an equation 2 (unit: kHz) and a predetermined frequency in a range of a relatively high second frequency f2 satisfying an equation 3 (unit:kHz) is flown in the hermetic vessel:

$$[\text{Equation 2}]$$

$$70 \leq f1 \leq 130$$

[Equation 3]

$$120 \leq f2 \leq 260$$

5. A metal halide discharge lamp system comprising:

a metal halide discharge lamp according to any one of claims 1 to 4; and
an operating circuit constructed to supply an electric current having a frequency component generating an acoustic resonance phenomenon in a direction crossing a straight line connecting the electrodes of the metal halide discharge lamp to the metal halide discharge lamp, and to light the lamp.

## FIG. 1

## FIG. 2

20

## FIG. 3

## FIG. 4A

## FIG. 4B

*FIG. 5*

*FIG. 6*

## INTERNATIONAL SEARCH REPORT

International application No.

PCT/JP2006/305843

A. CLASSIFICATION OF SUBJECT MATTER
*H05B41/288*(2006.01), *H05B41/24*(2006.01), *H01J61/86*(2006.01), *H01J61/12*
(2006.01), *H01J61/88*(2006.01)

According to International Patent Classification (IPC) or to both national classification and IPC

B. FIELDS SEARCHED

Minimum documentation searched (classification system followed by classification symbols)
H05B41/14-41/298, H01J61/00-61/28

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>X | JP 8-195288 A  (Matsushita Electric Industrial Co., Ltd.),<br>30 July, 1996 (30.07.96),<br>Full text; all drawings<br>& US 5773937 A<br>Full text; all drawings<br>& EP 0713352 A2<br>Full text; all drawings | 1-3<br>4,5 |

☒ Further documents are listed in the continuation of Box C.      ☐ See patent family annex.

* Special categories of cited documents:
"A"   document defining the general state of the art which is not considered   to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

Date of the actual completion of the international search
18 April, 2006 (18.04.06)

Date of mailing of the international search report
25 April, 2006 (25.04.06)

Name and mailing address of the ISA/
Japanese Patent Office

Authorized officer

Facsimile No.

Telephone No.

Form PCT/ISA/210 (second sheet) (April 2005)

| **INTERNATIONAL SEARCH REPORT** | International application No. |
|---|---|
| | PCT/JP2006/305843 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 11-238488 A  (Toshiba Lighting & Technology Corp.), 31 August, 1999 (31.08.99), Claim 1 & JP 2002-093369 A       & JP 2003-162976 A & JP 2003-178710 A       & JP 2005-019421 A & US 2002/0047526 A1 Claim 1 & US 6353289 B1       & US 2003/0209986 A1 & EP 0883160 A1       & EP 1296354 A2 | 1-3 |
| Y | JP 11-273621 A  (Ushio Inc.), 08 October, 1999 (08.10.99), Par. No. [0004] (Family: none) | 2 |
| Y | JP 11-283576 A  (Toshiba Lighting & Technology Corp.), 15 October, 1999 (15.10.99), Par. No. [0006] (Family: none) | 2 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11238488 A
- JP 7009835 A